# EUROPÄISCHE PATENTSCHRIFT

(11) **EP 1 851 681 B1**
(45) Veröffentlichungstag und Bekanntmachung des Hinweises auf die Patenterteilung: **11.08.2010**
(21) Anmeldenummer: 06705830.5
(22) Anmeldetag: 21.01.2006
(51) Int. Cl.: G06K 9/32, G08G 1/16

(54) **VERFAHREN ZUR ERKENNUNG DER AKTIVIERUNG VON BREMSLEUCHTEN VORAUSFAHRENDER FAHRZEUGE**
METHOD FOR IDENTIFYING THE ACTIVATION OF THE BRAKE LIGHTS OF PRECEDING VEHICLES
PROCEDE POUR IDENTIFIER L'ACTIVATION DE FEUX DE STOP DE VEHICULES CIRCULANT DEVANT

(30) Priorität: 22.02.2005 DE 102005007946; 03.11.2005 DE 102005052469
(43) Veröffentlichungstag der Anmeldung: 07.11.2007
(73) Patentinhaber: ADC Automotive Distance Control Systems GmbH, 88131 Lindau (DE)
(72) Erfinder: FECHNER, Thomas, 88079 Kressbronn (DE); ASMUTH, Marcus, 85092 Kösching (DE)
(74) Vertreter: Büchner, Jörg
(86) Internationale Anmeldenummer: PCT/DE2006/000092
(87) Internationale Veröffentlichungsnummer: WO 2006/089498

(56) Entgegenhaltungen:
- EP-A- 1 024 050
- DE-A1- 19 648 826
- DE-A1- 19 734 005
- US-A1- 2005 134 479
- FRANKE U ET AL: "AUTONOMOUS DRIVING GOES DOWNTOWN" IEEE EXPERT, IEEE SERVICE CENTER, NEW YORK, NY, US, Bd. 13, Nr. 6, November 1998 (1998-11), Seiten 40-48, XP000848997 ISSN: 0885-9000

## Beschreibung

Die Erfindung betrifft ein Verfahren zur Erkennung der Aktivierung von Bremsleuchten vorausfahrender Fahrzeuge, bei der ein vorausfahrendes Fahrzeug mit einem Bildsensor erfasst wird und bei erkanntem Aufleuchten der Bremsleuchten ein Signal ausgegeben wird, dass in einer Warnvorrichtung und/oder in einem Fahrerassistenzsystem umgesetzt werden kann.

In der Patentschrift EP 0380 797 wird die Erkennung der Rückleuchten eines Kraftfahrzeugs im Infrarotbereich mit einer CCD Bildsensor beschrieben. Vorteilhaft an der Erkennung mit einem CCD Bildsensor im Infrarotbereich ist, dass die Empfindlichkeit des Bildsensors höher ist, als die des menschlichen Auges im roten sichtbaren Spektralbereich, wo dass eine sichere Funktion bei verschiedensten Licht- und Witterungsverhältnissen gewährleistet wird. Bei einer aufgenommenen Strahlungsintensität oberhalb eines vorgegebenen Schwellwerts, wenn also der Abstand zwischen den Fahrzeugen einen kritischen Wert unterschritten hat, wird ein Warnsignal auslöst. Zur Erkennung der Aktivierung der Bremsleuchten ist ein zusätzliches modulierbares Infrarotsignal am vorausfahrenden Fahrzeug vorgesehen, dessen Modulation sich beim Bremsvorgang verändert. Bei Modulationsänderung wird ebenfalls ein Warnsignal ausgegeben. Eine Umsetzung der Warnsignale werden in einer Warnvorrichtung und/oder einem Fahrzeugeingriff sind vorgesehen.

Aus der Offenlegungschrift DE 19648826 ist es bekannt, bei einem vorausfahrenden Fahrzeug die Warnblinkanlage zu detektieren, und zwar aus dem Aus- und Aushalten der Leuchten und den Abständen zu den Fahrzeugkonturen.

In der Offenlegungsschrift DE 19734005 wird eine Vorrichtung zur Verringerung des Bremswegs bei Kraftfahrzeugen vorgestellt, die sich eines Infrarotsensors zur Erkennung eines Bremslichtaufleuchtens des vorausfahrenden Fahrzeugs bedient. In einer als kritisch eingeschätzten Situation, z. B. bei Aktivierung der Bremsleuchten und geringem Fahrzeugabstand, wird ein Warnsignal erzeugt und es werden geeignete Maßnahmen wie die Warnung des Fahrers, Einziehung des Bremspedals und die Vorladung des Bremssystems eingeleitet.

Die Aufgabe der Erfindung liegt darin, ein Verfahren zur schnellen und kostengünstigen Erkennung der Aktivierung von Bremsleuchten auch solcher vorausfahrender Fahrzeuge anzugeben, die kein zusätzliches oder verändertes moduliertes Signal beim Bremsvorgang abstrahlen.

Diese Aufgabe wird gemäß eines Verfahrens des Patentanspruchs 1 gelöst. Die abhängigen Patentansprüche zeigen vorteilhafte Ausführungsformen und Weiterentwicklungen der Erfindung auf.

Es ist ein Bildsensor oder einem Bildsensorsystem vorgesehen, das auf eine Szene vor dem Fahrzeug ausgerichtet ist, wobei die Bilder in einen Speicher eingelesen werden. Das aufgenommene Bild wird mittels eines Mustererkennungsverfahrens auf das Vorhandensein eines vorausfahrenden Fahrzeugs überprüft. Wird ein Fahrzeug identifiziert, werden nach einer vorher festgelegten Methode relevante Bildbereiche identifiziert, die mit hoher Wahrscheinlichkeit die Positionen der Bremslichter beinhalten. Von zwei zeitlich zueinander versetzten Bildern wird ein Differenzbild erstellt bei der Bilder voneinander subtrahiert werden, die mit einem zeitlich sinnvollem Abstand der sich nach der "Zünddauer" des Bremslichts richtet, aufgenommen wurden. Die relevanten Bildbereichen werden auf für einen Einschaltvorgang einer Leuchte typische Helligkeitssprünge hin analysiert. Ist dieser Helligkeitssprung größer als ein gesetzter Schwellwert, wird eine Aktivierung der Bremsleuchte des voranfahrenden Fahrzeugs erkannt.

In einer besonderen Ausgestaltung der Erfindung wird bei periodisch wiederkehrenden Helligkeitssprüngen vorzugsweise mit einer vorgegebenen Wiederholfrequenz ein Betrieb der Bremslichter erkannt. Auf diese Weise werden blinkende Bremslichter eindeutig an ihrer vorgegebenen Frequenz bzw. ihrem vorgegeben Frequenzbereich erkannt. Die Anzahl der ausgelesenen Bilder pro Zeiteinheit ist der zu erwartenden Frequenz bzw. dem zu erwartenden Frequenzbereich des blinkenden Bremslichts angepasst. Der Wert der Wiederholfrequenz kann z.B. durch eine Ortsfrequenzanalyse oder anhand einer Differenzbildanalyse aus den Bilddaten bestimmt werden.

In einer bevorzugten Ausgestaltung der Vorrichtung wird zusätzlich überprüft, ob die als relevant charakterisierten Helligkeitssprünge von eine Form aufweisen, die für Bremsleuchten charakteristisch ist. Z. B. eine kreisrunde Form, da Bremsleuchten in der Regel punktförmig Strahlung emittieren. Nach der Verifizierung einer punktförmigen Lichtquelle wird eine Aktivierung der Bremsleuchte erkannt. In einer vorteilhaften Ausführungsform wird zusätzlich überprüft, ob zwei Helligkeitssprünge an Orten gleicher Höhe über der Fahrbahn und mit gleichem Abstand zur Fahrzeugmitte auftreten, und bei einem positiven Resultat wird eine Aktivierung der Bremsleuchte erkannt.

In einer vorteilhaften Ausführungsform werden die Helligkeitssprünge in aufeinander folgenden Bildern dahingehend analysiert, ob eine Veränderung der Größe und/ oder der Form derselben Lichtquelle bzw. Rückleuchte mit der Zeit eintritt. Eine Vergrößerung der leuchtenden Fläche eines Bremslichts kann z.B. eine stärker werdende negative Beschleunigung anzeigen. Verändert sich die Form und/oder Größe einer Lichtquelle in einer vorgegeben Weise, wird daraus eine Aktivierung der Bremsleuchten erkannt bzw. eine frühere Erkennung bestätigt. Zudem kann bei einer vorgegeben Veränderung von Form und Größe des Bremslichts auf die Stärke des Bremseingriffs geschlossen und es wird ein entsprechendes Signal ausgegeben. Weiterhin kann im Fahrzeug zusätzlich ein weiterer Sensor vorgesehen sein, der die Identifizierung eines vorausfahrenden Fahrzeugs unterstützt. Der optionale Sensor kann eine Vorrichtung zur Abstands- und/oder Geschwindigkeitsmessung sein und diese Messdaten werden für die Entscheidung ein Warnsignal auszugegeben berücksichtigt.

Weitere Vorteile und Besonderheiten der Erfindung werden anhand eines Ausführungsbeispiels und von zwei Abbildungen beispielhaft näher erläutert.

Es zeigen:
Fig. 1: Blockschaltbild
Fig. 2: Verfahrensablauf zur Erkennung der Erkennung der Aktivierung von Bremsleuchten vorausfahrender Fahrzeuge

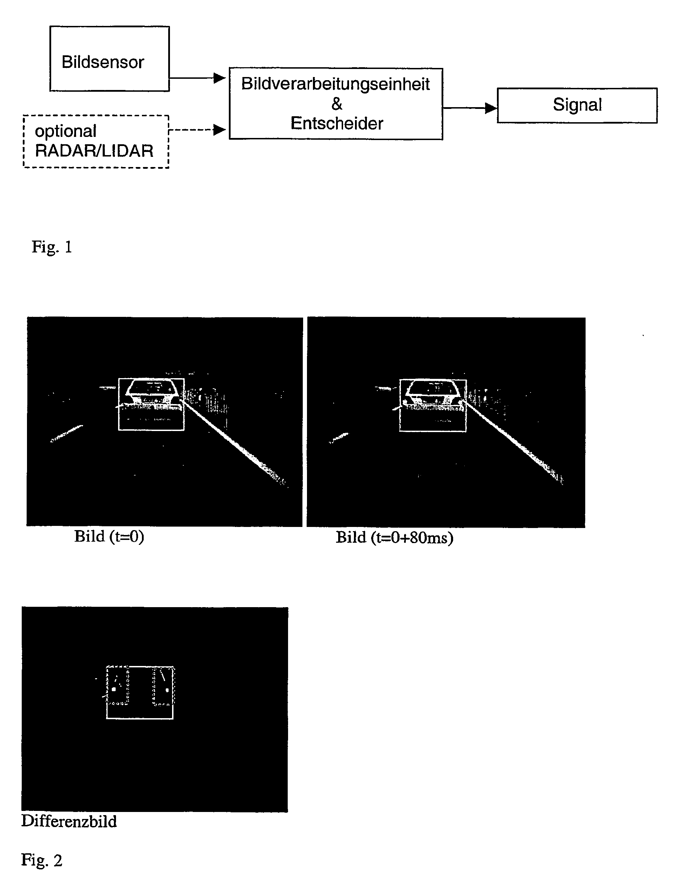

In Figur 1 ist der Ablauf des Verfahrens in einem Blockschaltbild erläutert. Zunächst werden aufeinanderfolgende Bilder mit einem Bildsensor aufgenommen. Vorteilhaft ist hier z.B. die Verwendung einer CCD-Kamera zur Aufnahme von roter und/oder infraroter Strahlung. Die Bilder werden übergangsweise in einer Bildverarbeitungseinheit gespeichert und ein vorausfahrendes Fahrzeug wird im Kamerabild mittels Kantenextraktion oder anderen Mustererkennungsverfahren wie z.B.Template Matching segmentiert. Dabei kann zur Unterstützung auch ein weiterer Sensor verwendet werden, der ein vorausfahrendes Fahrzeug erfasst und dessen Zielmeldung in das Bild projiziert wird und die Region vorgibt die das Fahrzeug beinhaltet. Dies kann z.B. ein Radar- oder Lidar-Sensor sein.

Ausgehend von einem das Fahrzeug umgebenden Rechteck (Bounding Box) das in Figur 2 oben links dargestellt ist, werden die zwei symmetrische Regionen, in denen die Bremslichter vermutet werden, bestimmt. Diese relevanten Regionen zeigt Figur 2 unten links. Bilder werden aufeinanderfolgend mit einem Zeitabstand von 80 ms aufgenommen. Mittels einer Differenzbild-Analyse, bei der Bilder voneinander subtrahiert werden, die mit einem zeitlich sinnvollem Abstand der sich nach der "Zünddauer" des Bremslichts richtet, aufgenommen wurden, wird nach zeitlich starken Helligkeitssprüngen gesucht. Das Differenzbild entsteht durch Subtraktion des letzen Bildes vom aktuellen Bild. In Figur 2 ist zunächst oben links ein Fahrzeug ohne aktivierte Bremsleuchten dargestellt, in dem darauffolgenden 80 ms später aufgenommenen Bild, das oben recht dargestellt ist, sind die Bremsleuchten dahingegen sichtbar aktiviert. Das Differenzbild der beiden Bilder ist in Figur 2 unten links gezeigt, deutlich sind die beiden hellen Punkte in den relevanten Bildregionen erkennbar. Auf die Intensitäten des Differenzbildes wird eine einfache Schwellwertoperation angewendet. Eng benachbarte Pixels hoher Intensität werden zu einem Objekt zusammengefasst. Gefiltert werden dann Objekte mit kreisförmigen Eigenschaften z.B. anhand der Überprüfung des Verhältnisses von Umfang zu Fläche. Zur Absicherung eines potentiell aufleuchtenden Bremslichts werden Symmetrieeigenschaften wie gleiche Höhe über der Fahrbahn und gleicher Abstand zur Fahrzeugmitte zum jeweils gegenüberliegenden Bremslicht abgefragt. Das Ergebnis ist ein Signal, das anzeigt, ob die Bremsleuchten des vorausfahrenden Fahrzeugs aktiviert wurden.

## Patentansprüche

1. Verfahren zur Erkennung der Aktivierung von Bremsleuchten vorausfahrender Fahrzeuge, wobei ein Bildsensor oder ein Bildsensorsystem auf eine Szene vor dem Fahrzeug ausgerichtet ist und Kamerabilder in einen Speicher eingelesen werden
**dadurch gekennzeichnet, dass**
ein vorausfahrendes Fahrzeug mittels eines Mustererkennungsverfahrens auf dem Bild identifiziert wird und zudem nach Erkennung des Fahrzeugs Bildbereiche bestimmt werden, die mit hoher Wahrscheinlichkeit die Position der Bremslichter beinhalten und
von zwei zeitlich versetzt aufgenommenen Bildern ein Differenzbild gebildet wird und bei Helligkeitssprüngen in relevanten Bildbereichen eine Aktivierung der Bremsleuchten erkannt wird.

2. Verfahren nach Anspruch 1,
**dadurch gekennzeichnet, dass**
bei periodisch wiederkehrenden Helligkeitssprüngen eine Aktivierung der Bremsleuchten erkannt wird.

3. Verfahren nach Anspruch 2,
**dadurch gekennzeichnet, dass**
bei periodisch wiederkehrenden Helligkeitssprüngen mit einer vorgegeben Wiederholfrequenz eine Aktivierung der Bremsleuchten erkannt wird.

4. Verfahren nach einem der vorherigen Ansprüche,
**dadurch gekennzeichnet, dass**
zudem die Form der Gebiete, die Helligkeitssprünge aufweisen, analysiert wird und bei vorgegebenen Formen, insbesondere bei kreisrunden Formen, eine Aktivierung der Bremsleuchten erkannt wird.

5. Verfahren nach einem der vorherigen Ansprüche,
**dadurch gekennzeichnet, dass**
zudem die Position der Helligkeitssprünge analysiert wird, und nur wenn diese an zwei Orten mit gleicher Höhe über der Fahrbahn und mit gleichem Abstand zur Fahrzeugmitte liegen, eine Aktivierung der Bremsleuchten erkannt wird.

6. Verfahren nach einem der vorherigen Ansprüche,
**dadurch gekennzeichnet, dass**
bei Helligkeitssprüngen in aufeinander folgenden Bildern, die durch eine Veränderung der Größe und/ oder der Form derselben Lichtquelle bzw. Rückleuchte mit der Zeit hervorgerufen werden, eine Aktivierung der Bremsleuchten erkannt wird.
mit der Zeit hervorgerufen werden, eine Aktivierung der Bremsleuchten erkannt wird.

7. Verfahren nach einem der vorherigen Ansprüche,
**dadurch gekennzeichnet, dass**
aus Helligkeitssprüngen in aufeinander folgenden Bildern, die durch eine Veränderung der Größe und/ oder der Form derselben Lichtquelle bzw. Rückleuchte mit der Zeit hervorgerufen werden, eine Aktivierung der Bremsleuchten erkannt und/oder auf die Stärke des Bremseingriffs geschlossen wird.

8. Verfahren nach einem der vorherigen Ansprüche,
**dadurch gekennzeichnet, dass**
ein Lidar- oder Radarsystem vorgesehen ist, dass die Identifizierung eines vorausfahrenden Fahrzeugs unterstützt und/oder Informationen über den Abstand und/oder die relative Geschwindigkeit zum vorausfahrenden Fahrzeug für die Entscheidung ein Warnsignal auszugeben berücksichtigt werden.

## Claims

1. Method for detecting the activation of stop lights of vehicles driving ahead, wherein an image sensor or an image sensor system is oriented towards a scene in front of the vehicle and camera images are inputted into a memory,
**characterized in that**
a vehicle driving ahead is identified in the image by means of a pattern recognition method and, after the detection of the vehicle, regions of the image that are very likely to contain the position of the stop lights are determined and a difference image is created from two images that were recorded at different times and the activation of the stop lights is detected from brightness jumps in relevant regions of the image.

2. Method according to claim 1,
**characterized in that**
the activation of the stop lights is detected from periodic brightness jumps.

3. Method according to claim 2,
**characterized in that**
the activation of the stop lights is detected from periodic brightness jumps with a predetermined frequency of recurrence.

4. Method according to any one of the preceding claims,
**characterized in that**
also the shape of the regions that contain brightness jumps is analyzed and the activation of the stop lights is detected from predetermined shapes, in particular from circular shapes.

5. Method according to any one of the preceding claims,
**characterized in that**
also the position of the brightness jumps is analyzed and the activation of the stop lights is only detected if the brightness jumps occur in two positions that are on the same level above the roadway and that have the same distance to the center of the vehicle.

6. Method according to any one of the preceding claims,
**characterized in that**
the activation of the stop lights is detected from brightness jumps in successive images that are caused by a change of the size and/or of the shape of the same light source or tail light with the passage of time.

7. Method according to any one of the preceding claims,
**characterized in that**
the activation of the stop lights is detected from and/or the intensity of the braking intervention is inferred from brightness jumps in successive images that are caused by a change of the size and/or of the shape of the same light source or tail light with the passage of time.

8. Method according to any one of the preceding claims,
**characterized in that**
a lidar or a radar system is provided that supports the identification of a vehicle driving ahead and/or information on the distance to and/or on the relative speed to the vehicle driving ahead is taken into consideration when deciding whether a warning signal is to be outputted or not.

## Revendications

1. Procédé de détection de l'activation de feux stop de véhicules qui précèdent, un capteur d'images ou un système de capteurs d'images étant dirigé vers une scène devant le véhicule, et des images de caméra pouvant être introduites dans une mémoire,
**caractérisé en ce**
**qu'**un véhicule qui précède est identifié sur l'image au moyen d'un procédé de reconnaissance de formes, et en ce que des zones d'images sont en outre déterminées après la détection du véhicule, qui contiennent avec une forte probabilité la position des feux stop, et en ce qu'une image différentielle est formée à partir de deux images prises avec un décalage dans le temps, et en ce qu'une activation des feux stop est détectée en présence de sauts de luminosité dans des zones d'images pertinentes.

2. Procédé selon la revendication 1,
**caractérisé en ce que**,
en présence de sauts de luminosité revenant périodiquement, une activation des feux stop est détectée.

3. Procédé selon la revendication 2,
**caractérisé en ce que**,
en présence de sauts de luminosité revenant périodiquement avec une fréquence de répétition prédéfinie, une activation des feux stop est détectée.

4. Procédé selon une des revendications précédentes,
**caractérisé en ce que**,
en outre, la forme des secteurs qui présentent des sauts de luminosité est analysée et, en présence de formes prédéfinies, en particulier en présence de formes circulaires, une activation des feux stop est détectée.

5. Procédé selon une des revendications précédentes,
**caractérisé en ce que**,
en outre, la position des sauts de luminosité est analysée, et une activation des feux stop est détectée seulement lorsque ceux-ci sont situés en deux endroits de même hauteur au-dessus de la chaussée et avec une même distance par rapport au milieu du véhicule.

6. Procédé selon une des revendications précédentes,
**caractérisé en ce**
**qu'**une activation des feux stop est détectée en présence de sauts de luminosité dans des images qui se suivent et qui sont suscités avec le temps par une variation de la dimension et/ou de la forme de la même source de lumière ou du feu arrière.

7. Procédé selon une des revendications précédentes,
**caractérisé en ce que**,
à partir de sauts de luminosité dans des images qui se suivent et qui sont suscités avec le temps par une variation de la dimension et/ou de la forme de la même source de lumière ou du feu arrière, une activation des feux stop est détectée et/ou une conclusion est tirée sur l'intensité de l'intervention de freinage.

8. Procédé selon une des revendications précédentes,
**caractérisé en ce**
**qu'**il est prévu un système lidar ou radar qui assiste l'identification d'un véhicule qui précède, et/ou en ce que des informations sur la distance et/ou la vitesse relative du véhicule qui précède sont prises en compte pour la décision de délivrer un signal d'avertissement.
